# EUROPEAN PATENT APPLICATION

(11) **EP 1 433 756 A1**
(43) Date of publication of application: **30.06.2004**
(21) Application number: 02447269.8
(22) Date of filing: 24.12.2002
(51) Int. Cl.: C02F 11/14

(54) **Process for treating sludge, in particular wastewater treatment sludge, to reduce the weight thereof**

(71) Applicant: Aquafin N.V., 2630 Aartselaar (BE)
(72) Inventor: Baeyens, Jan, 3120 Tremelo (BE); Neyens, Elisabeth, 1780 Wemmel (BE)
(74) Representative: Van Reet, Joseph

(57) **Abstract**

In the process for treating sludge to reduce the weight thereof, in particular wastewater treatment sludge, such as sewage sludge, the sludge is first conditioned by means of an amount of at least one peroxymonosulfate containing compound to improve the dewaterability of the sludge. Subsequently, the conditioned sludge is dewatered mechanically. According to the invention, at least a portion of the amount of the peroxymonosulfate containing compound is added to the sludge in a state wherein it is dissolved in an aqueous medium. Preferably, use is made of the triple salt 2KHSO₅.KHSO₄.K₂SO₄ from which either an aqueous solution is made or an aqueous suspension before adding it to the sludge. In this way, the effect of the addition of the peroxymonosulfate containing compound on the dewaterability of the sludge is improved.

## Description

The present invention relates to a process for treating sludge to reduce the weight thereof, in particular wastewater treatment sludge, such as sewage sludge, containing organic and inorganic matter, which process comprises the step of conditioning the sludge wherein an amount of at least one peroxymonosulfate containing compound is added to the sludge and allowed to react therewith, and the step of mechanically dewatering the conditioned sludge.

Most processes for treating industrial or municipal wastewater result in an amount of excess sludge that needs to be disposed off. This sludge consists of sludge produced by a physico-chemical treatment of the wastewater, of sludge produced during a biological treatment of the wastewater, or of a combination thereof. The sludge can be described as a complex aqueous suspension or solution of inorganic and organic matter.

In practice, excess waste water treatment sludge is usually thickened, conditioned by means of organic and/or inorganic flocculants/coagulants and subsequently dewatered for further drying and/or disposal. Both the economic and environmental impact of sludge disposal imply that there is a high interest to reduce the amount of sludge disposed off.

Starting from a produced amount of excess sludge and expressing the sludge disposal on a weight basis, there are basically two principles for reducing the weight of the excess sludge disposed off:
First, the weight of the sludge disposed off can be reduced by reducing the amount of water in the excess sludge. This will be achieved by sludge treatment processes that remove water from sludge, such as thickening, dewatering and thermal drying. Thickening and dewatering can include the addition of conventional coagulation or flocculation agents - such as e.g. polyelectrolytes, iron(III)chloride, etc. ; further referred to as conditioning agents - to improve the dewaterability of the sludge. The sludge phase and the water phase obtained after dewatering the sludge is referred to as the sludge cake and the sludge water, respectively.
Secondly, the weight of the sludge disposed off can be reduced by reducing the amount of dry solids in the excess sludge. The term dry solids (DS) refers to the material residue left after evaporation and drying of a sludge sample to a constant weight in an oven at 103 to 105°C. Reducing dry solids will be achieved by sludge treatment processes that physically, chemically or biologically transform sludge components into (i) gaseous components that are emitted from the sludge (e.g. CO₂) or (ii) dissolved and also non-dissolved components that are removed from the sludge by dewatering (e.g. hydrolysis of dry solids).

US-B-6 368 511 discloses a sewage sludge dewatering process wherein the organic sludge components are partially oxidised by means of hydrogen peroxide (H₂O₂) before dewatering the sludge. In the disclosed method a loading of 15 to 80 g H₂O₂ is maintained per kg sludge dry solids. Before adding the H₂O₂, the pH of the sludge is lowered to a pH value below 5, preferably below 4, and after the reaction with the H₂O_{2,} the pH of the sludge is raised again to a pH value of between 9 and 11. An important drawback of this known process is that, in order to achieve the successive pH adjustments, relatively large amounts of an inorganic acid (HCl) and of an inorganic base (Ca(OH)₂) have to be added. The pH adjustments can thus lead to the formation of large amounts of salt increasing significantly the total amount of dry solids in the dewatered sludge. The pH adjustments require also extra equipment and sludge handling which can be a drawback from an operational point of view.

Another sludge treatment process to reduce the weight of the sludge disposed is described in the thesis of Neyens E. "Evaluation of some physico-chemical treatment techniques for reducing the sludge production", Catholic University of Leuven, Faculty of Engineering, Department of Chemical Engineering, Heverlee, Belgium. June 2000. The disclosed process comprised the addition of the powdery triple salt 2KHSO₅.KHSO₄.K₂SO₄ to a thickened municipal wastewater treatment sludge having a dry solids content of 8.89% by weight.

The treatment process investigated by Neyens (2000) consisted of the following steps: (1) direct addition of the powder form of the triple salt 2KHSO₅.KHSO₄.K₂SO₄ to the sludge, (2) allowing for the sludge to react with the dosed triple salt in a timespan of 1 hour under mixed conditions and (3) subsequent dewatering of the sludge with mechanical dewatering equipment and the aid of the conventional conditoning agents.

The triple salt was added in amounts of 0.5; 1.0; 2.0; 3.0 and 4.0 g per 100 g sludge corresponding to an addition of about 183; 365; 739; 1098 and 1465 mmol (millimoles) KHSO₅ per kg dry solids. The amount of sludge cake achieved after the dewatering step was reduced respectively with 47; 44; 53; 61 and 28%. Before the dewatering step the reduction of the amount of dry solids was respectively 20; 22; 16; 5 and -15%. The negative reduction for the highest dose could be explained by the dry solids fraction of the triple salt residue.

The reduction of the weight of the sludge cake can be attributed to three effects. First, complete or partial chemical oxidation of dry solids into compounds such as CO₂ and H₂O and thus obtaining a lower amount of dry solids in the sludge before the dewatering step. This implies that the amount of oxidised dry solids is higher than the dry solids fraction of the triple salt residue. Second, complete or partial decomposition of dry solids into dissolved or non-dissolved components that are removed from the sludge with the sludge water. This removed fraction of dry solids is typically recycled with the sludge water to the wastewater treatment that initially produced the excess sludge. Third, better dewaterabilty characteristics obtaining a higher volume of sludge water that is removed from the sludge.

An object of the present invention is to provide a new process which enables to achieve a higher efficiency of the addition of the peroxymonosulfate containing compound, i.e. to achieve a larger reduction of the weight of the dewatered sludge (sludge cake) for a same amount of peroxymonosulfate containing compound or to achieve a same reduction of the weight of the dewatered sludge (sludge cake) by means of a smaller amount of peroxymonosulfate containing compound.

To this end the process according to the invention is characterised in that at least a portion of said amount of the peroxymonosulfate containing compound is added to the sludge in a state wherein it is dissolved in an aqueous medium.

It has been found that the efficiency of the peroxymonosulfate containing compound is considerably increased when adding it at least partially in a dissolved state instead of adding it in a powdery state. This has especially been observed for the 2KHSO₅.KHSO₄.K₂SO₄ triple salt. The observed efficiency increase is rather surprising considering the relatively high and readily water solubility of the triple salt and the aqueous character of the sludge.

The portion of the peroxymonosulfate containing compound which is added in a dissolved state comprises preferably at least 10% by weight, more preferably at least 30% by weight, and most preferably at least 50% by weight of the total amount of peroxymonosulfate containing compound added to the sludge.

The amount of peroxymonosulfate containing compound to be added to the sludge can in particular be contained entirely in the aqueous medium which is added to the sludge. In this way, the peroxymonosulfate containing compound can be dosed easily into the sludge. The peroxymonosulfate containing compound may be entirely dissolved in this aqueous medium or it may be partially dissolved and partially dispersed therein.

In an advantageous embodiment of the process according to the invention, the sludge to which the peroxymonosulfate containing compound is added contains D kg of dry solids and the amount of the peroxymonosulfate containing compound which is added to the sludge comprises less than 300xD mmol, preferably less than 175xD mmol, and most preferably less than 150xDmmol peroxymonosulfate ions.

Due to the fact that at least a portion of the peroxymonosulfate containing compound is added in a dissolved state, smaller amounts of this compound are needed per kilogram dry solids in the sludge to achieve a better dewaterability of the sludge. The use of smaller amounts of peroxymonosulfate containing compound, in particular amounts smaller than 175xD mmol peroxymonosulfate ions per kg dry solids in the sludge, may further be advantageous in view of the fact that due to the reduced hydrolysis or oxidation of the dry solids, the sludge water (which is returned to the wastewater treatment installation) is less loaded with organic or inorganic pollutants. In this way, a strong release of volatile fatty acids, which may have a negative effect on the sludge sedimentation characteristics, or a strong release of phosphorous compounds (when treating so-called Bio-P sludge, i.e. sludge produced by wastewater treatment processes that implement a biological removal of phosphorous compounds from the wastewater) can be avoided while still maintaining a better dewaterability.

Other particularities and advantages of the invention will become apparent from the following description of some particular embodiments of the sludge treatment process according to the present invention. In this description reference is made to the annexed drawings wherein:
Figure 1 is a graph illustrating the evolution of the orthophosphate concentration in the sludge water of KHSO₅ treated Bio-P sludge; and
Figure 2 is a block diagram illustrating a profile of heavy metal content of the sludge cake obtained on dewatering KHSO₅ treated and untreated sludge.

The process according to the present invention is intended to reduce the weight of excess sludge containing water and dissolved or dispersed organic and inorganic matter. Such excess sludge is in particular produced in municipal and industrial wastewater treatment processes. The process according to the invention can, however, also be used to reduce the weight of other kinds of sludge, such as liquid or semi-liquid manure.

Wastewater can be treated in practice by two different processes, namely by a physico-chemical treatment and by a biological treatment. In some cases both treatment systems are combined. Both treatment systems can result in the formation of excess sludge. The process according to the invention can be used to improve the dewaterability of both kinds of sludge or of combinations thereof.

In most cases, the sludge is removed out of the wastewater treatment system by means of a settlement tank. This sludge has usually a dry solids content of between 0.6 and 2.5% by weight. In a wastewater treatment system wherein phosphorous compounds are removed biologically, the sludge is in some cases removed directly from the aeration basin of the biological treatment. This so-called Bio-P sludge has usually a dry solids content around 0.4% by weight, namely a dry solids content which is substantially equal to the dry solids content of the activated sludge in the aeration basin.

After having removed the sludge from the wastewater treatment installation, the sludge is thickened either gravitationally or mechanically to a dry solids content which is usually comprised between 1.5 and 10% by weight. The thickened sludge can be stored in a thickened sludge buffer. In a next step, the thickened sludge is dewatered mechanically by means of equipment such as a chamber filter press, a belt press or a centrifuge. To improve the dewaterability of the thickened sludge, organic or inorganic conditioning agents can be added to the sludge before dewatering it, in particular polyelectrolytes, iron(III)chlorides, etc. Also mechanical thickening will in most cases involve the addition of these conditioning agents.

For Bio-P sludge, it can be recommended to perform the sludge thickening and dewatering as fast as possible with a minimum sludge buffering/storage before the thickening or dewatering step. The reason for this is to prevent anaerobic sludge storage conditions in order to avoid as much as possible unwanted release of biologically stored phosphorous compounds to the sludge water, which is recycled to the wastewater treatment installation. Therefore Bio-P sludge can be directly mechanically thickened and subsequently dewatered.

In accordance with the invention, the dewaterability of the sludge is improved by adding at least one peroxymonosulfate containing compound to at least a portion of the sludge which is to be dewatered and allowing this compound to react therewith. The peroxymonosulfate containing compound can be added to the sludge as it is removed from the wastewater purification installation. This sludge can be non-settled sludge (dry solids content of at least 0.2% by weight, preferably of at least 0.3% by weight), settled sludge (dry solids content of at least 0.6% by weight, preferably of at least 1.2% by weight) and sludge thickened by gravity (dry solids content of at least 2% by weight, preferably of at least 3% by weight) or mechanically (dry solids content of at least 4% by weight, preferably of at least 6% by weight).

The higher the dry solids content, mixing the peroxymonosulfate containing compound homogeneously in the sludge requires less sludge handling and smaller tanks have to be provided for the reaction between the peroxymonosulfate containing compound and the sludge. In the case of Bio-P sludge, however, due to the operational set-up of direct combined sludge thickening and dewatering it can be advantageous to add the peroxymonosulfate containing compound to the removed sludge having a low dry solids content. In general, however, the dry solids content of the sludge is preferably lower than 15% by weight when adding the peroxymonosulfate containing compound for reasons of sludge mixing and handling.

The peroxymonosulfate containing compound can be added in a separated dedicated reactor or in process unit that is already available in the sludge treatment line, such as for example in the sludge buffer of thickened sludge. The total retention time of the sludge in the reactor is preferably in the range of at least 5 to 120 minutes.

The peroxymonosulfate containing compound may either be hydrogen peroxymonosulfate (peroxymonosulfuric acid or Caro's acid) or a peroxymonosulfate salt, in particular sodium or potassium peroxymonosulfate (KHSO₅). A problem with the peroxymonosulfate containing compounds is that most of them are not stable. Peroxymonosulfuric acid can for example not be stored but has to be produced directly prior to being used. Instead of the peroxymonosulfuric acid also a more stable solution or suspension of a peroxymonosulfate salt can be used, such as an aqueous sodium peroxymonosulfate solution. However, in view of the easier handling and storing of a solid product, and in view of the higher stability, even after dissolving it in water, use is preferably made of the triple salt 2KHS0₅.KHS0₄.K₂S0₄. This triple salt dissolves completely and quickly in water, more particularly up to 25.6% by weight at 20°C. Based on the chemical formula, the triple salt contains about 49.5% by weight of the peroxymonosulfate containing compound KHS0₅.

In the process according to the invention, at least a portion of the amount of peroxymonosulfate containing compound has to be added to the sludge in a state wherein it is dissolved in an aqueous medium. This portion comprises preferably at least 10% by weight, more preferably at least 30% by weight, and most preferably at least 50% by weight of the total amount of peroxymonosulfate containing compound which is added to the sludge. As demonstrated in Example 1, it has been found that the effectivity of the peroxymonosulfate containing compound in improving the dewaterability of the sludge is improved significantly when adding the peroxymonosulfate containing compound at least partially in the form of an aqueous solution, notwithstanding the fact that the peroxymonosulfate containing compound is readily dissolvable in the aqueous sludge.

The amount of peroxymonosulfate containing compound added to the sludge may be added entirely in a dissolved state, in particularly in the form of an aqueous solution. This aqueous solution may be unsaturated, saturated or supersaturated at the application temperature. Instead of using an aqueous solution, use can also be made of an aqueous suspension which contains not only peroxymonosulfate containing compound dissolved in an aqueous medium, but also an amount of peroxymonosulfate containing compound dispersed therein.

In order to improve the dewaterability of an amount of sludge containing D kg of dry solids, the peroxymonosulfate containing compound is preferably added in an amount of less than 300xD mmol, more preferably less than 175xD mmol, and most preferably less than 150xD mmol peroxymonosulfate ions. For the triple salt 2KHSO₅.KHSO₄.K₂SO₄ these amounts correspond to about 92, 53 and respectively 46 g triple salt per kg dry solids. Using smaller amounts of the peroxymonosulfate containing compound does not only involve lower product costs but the contribution of the salt residues in the sludge cake is reduced and, for the smaller amounts, the oxidation and/or hydrolysis of the sludge compounds is reduced and thus the release of undesired compounds in the sludge water.

An important advantage of the process according to the invention is that the sludge has not to be acidified in order to enable the reaction between the sludge and the peroxymonosulfate containing compound. In fact, it has even been found that better effects are achieved when the pH of the sludge is higher than 5, and preferably higher than 6. In the process according to the invention, the pH of the sludge removed from the treated wastewater is preferably not adjusted to a value below 5 or above 9. In this way, not only an optimal effect of the peroxymonosulfate containing compound can be obtained but less operations and less chemicals are required compared to the known acid or alkaline hydrolysis processes. When the sludge removed from the treated wastewater has a pH higher than 5, the pH of the sludge is preferably maintained above pH 5, at least until the sludge has been mechanically dewatered, and when the sludge removed from the treated wastewater has a pH higher than 6, the pH of the sludge is more preferably maintained above pH 6. On the other hand, when the sludge removed from the treated wastewater has a pH lower than 9, the pH of the sludge is preferably maintained below pH 9, at least until the sludge has been mechanically dewatered, and when the sludge removed from the treated wastewater has a pH lower than 8, the pH of the sludge is more preferably maintained below pH 8.

In the process according to the invention, the conditioning of the sludge by means of the peroxymonosulfate containing compound may be performed well before the actual dewatering step, for example 1 week or more before this step. The sludge conditioned with the peroxymonosulfate containing compound can thus be transported to a common dewatering installation wherein sludges from different installations are dewatered. Prior to dewatering, the sludge conditioned in accordance with the present invention can thus be mixed with other sludges which were either also conditioned with the peroxymonosulfate containing compound or with sludges or even other materials which were not conditioned with the peroxymonosulfate containing compound.

For the actual dewatering step at least one further conditioning agent, i.e. a floculation and/or coagulation agent, such as a polyectrolite or iron(III)chloride, is preferably added to the sludge or sludge mixture. Also for mechanical thickening such a further conditioning agent is preferably added. In contrast to the addition of the peroxymonosulfate containing compound, the further conditioning agent is added preferably less than one day, preferably less than one hour before the mechanical thickening and/or dewatering. Consequently, in most cases, the peroxymonosulfate containing compound is preferably allowed to react with the sludge before the addition of the further conditioning agent.

In addition to the effect on the dewaterability of the sludge, the treatment with the peroxymonosulfate containing compound has further advantages that the treated sludge shows a lower odour generating potential, that the treatment may result in a partial hygienisation of the treated sludge, and that the concentration of heavy metals is decreased in the obtained sludge cake.

### EXAMPLES

In the following examples, the treatment process was carried out on a laboratory scale and consisted of the following steps: (1) addition of the triple salt 2KHSO₅.KHSO₄.K₂SO₄ in the form of an aqueous solution or suspension to the sludge, (2) allowing for the sludge to react with the dosed triple salt in a timespan of 1 hour under mixed conditions and (3) subsequent dewatering of the sludge with mechanical dewatering equipment and the aid of conventional conditioning agents which are mixed with the sludge a few minutes prior to the actual dewatering step.

The set-up and procedure for dewatering was the following: a polyelectrolite solution for sludge conditioning was made to a final concentration of 0.2 % by mixing concentrated polymer with distilled water for 15 min. The sludge was conditioned by progressively adding the polyelectrolite solution to the sludge and the sludge was mixed for 30 s at a mixing speed of 200 rpm (the amount of polyelectrolite solution added was beforehand optimised on the basis of a capillary suction time test). Subsequently the sludge was dewatered by using a vacuum-assisted Buchner filtration at a vacuum pressure of 38 cm Hg, and assessed for a 100 ml sample during a set time of 5 minutes. The resulting sludge cake was removed from the paper filter and further analysed.

The performance of the sludge treatment was evaluated in three ways:
1) The decrease (due to oxidation of DS) or increase (due to residue of added triple salt) of the total amount of dry solids in the treated sludge before the sludge conditioning and dewatering in comparison to the untreated sludge (on a relative basis, a negative number indicating an increase of the DS): 100% x (1 - (total dry solids treated sludge)/(total dry solids untreated sludge));
2) The DS content of the sludge cake of the treated sludge in comparison to the sludge cake of the untreated sludge (= conditioned only with a conventional polyelectrolyte);
3) The weight reduction of the sludge cake of the treated sludge in comparison to the sludge cake of the untreated sludge (on a relative basis): 100% x (1 - (weight sludge cake treated sludge)/(weight sludge cake untreated sludge)).

### Example 1.

Dosing the triple salt partially dissolved in an aqueous medium results in a clear enhanced performance of the process in comparison with the triple salt powder dosing. Table 1 illustrates the smaller reduction of the weight of the sludge cake by treatment in the case of powder dosing in comparison with the partially dissolved dosing. In this latter case, an aqueous suspension containing 400 g/l of the triple salt was dosed at room temperature into the sludge. This aqueous suspension contained an amount of dissolved triple salt (somewhat more than 250 g/I) and an amount of dispersed triple salt. The difference between both treatments could also be observed on a visual basis by the less intense colour change of the sludge in the case of triple salt powder dosing. Even increasing the reaction time in the case of powder dosing from 1 hour to 1 week, did not improve the obtained reduction of the weight of the sludge cake.

**Table 1:**

| Treatment of the sludge of the wastewater treatment plant of Tienen and Lokeren with (i) the triple salt powder dosing and (ii) the triple salt suspension dosing. The triple salt suspension contained 400 g triple salt/l. The reaction time was 1 hour. | | | | | | | |
|---|---|---|---|---|---|---|---|
| Treatment | Tienen | Tienen 1^{(a)} | Tienen 2^{(a)} | Tienen 2^{(b)} | Lokeren | Lokeren 1^{(a)} | Lokeren 2^{(a)} |
| Dosed KHSO₅ | 0 | suspension | powder | powder | 0 | Suspension | powder |
| g KHSO₅/kg DS | | 15.5 | 15.5 | 15.5 | | 7.4 | 7.4 |
| mmol KHSO₅/kg DS | | 102 | 102 | 102 | | 49 | 49 |
| Reduction of amount DS in treated sludge relative to untreated sludge (%) | - | 3 | -5 | 0 | - | 3 | -3 |
| Dry solids content of sludge cake (%) | 22 | 35 | 28 | 28 | 24 | 37 | 28 |
| Weight reduction of sludge cake (%) | - | 44 | 28 | 27 | - | 37 | 22 |

| | | | | | | | |
|---|---|---|---|---|---|---|---|
| (a) The treated sludge is conditioned and dewatered 1 hour after the addition of the triple salt. | | | | | | | |
| (b) Treatment 2 where the treated sludge is conditioned and dewatered 1 week after the addition of the triple salt. | | | | | | | |

### Example 2.

This example demonstrates that it is more relevant to express or determine the amount of triple salt to be dosed on a dry solids basis in stead of on a volumetric basis. The results presented in Table 2 illustrate that a on a volumetric basis constant KHSO₅ dosing to sludge samples characterised by a different dry solids content, results in a different reduction of the weight of the sludge cake. The reduction of the weight of the sludge cake is in accordance with the KHSO₅ dosing expressed on a dry solids basis.

**Table 2:**

| Expression and determination of the KHSO5 dosage on a volumetric or dry solids basis: treatment of different samples of the sludge of the wastewater treatment plant of Tienen characterised by a different dry solids content and applying on a volumetric basis a constant KHSO₅ dose. The triple salt suspension contained 400 g triple salt/I. The reaction time was 1 hour. | | | |
|---|---|---|---|
| Dosed KHS05 Volumetric basis (g KHSO₅/l sludge) | 0.495 | 0.495 | 0.495 |
| Dry solids basis g KHSO₅/kg DS | 6.1 | 7.7 | 13.7 |
| mmol KHSO₅/kg DS | 40 | 50 | 90 |
| DS content of sludge cake of untreated sludge (%) | 23 | 22 | 27 |
| Reduction of amount DS in treated sludge relative to untreated sludge before dewatering (%) | 1 | 2 | 2 |
| Dry solids content of sludge cake (%) | 33 | 34 | 42 |
| Weight reduction of sludge cake (%) | 34 | 39 | 43 |

### Exarnple 3.

This example demonstrates the advantage of the described sludge treatment process that the reduction of the weight of the sludge cake is also obtained when the dewatering of the KHSO₅ treated sludge is performed 1 week after the triple salt dosing.

**Table 3:**

| Preservation of the enhanced dewaterability for the KHSO₅ treated sludge of WWTP Leuven: dry solids content of sludge cake and reduction of weight of sludge cake of KHSO₅ treated sludge when dewatering (A) 1.5 h and (B) 1 week after the triple salt dosing. The triple salt suspension contained 400 g triple salt/I. | | | |
|---|---|---|---|
| Dosed KHSO₅ | | (A) | (B) |
| g KHSO_{S}/kg DS | 0 | 23.7 | 23.7 |
| mmol KHSO₅/kg DS | 0 | 156 | 156 |
| Reduction of amount DS in treated sludge relative to untreated sludge before dewatering (%) | - | 4 | 5 |
| Dry solids content of the sludge cake (%) | 14 | 27 | 27 |
| Weight reduction of sludge cake (%) | - | 47 | 49 |

### Example 4.

This example demonstrates the advantage of the process that the KHSO₅ treatment does not lead to an excessive loading of the sludge water with chemical or biological oxidizable compounds that would impair the treatment of the sludge water returned to the wastewater treatment process. An increase of BOD (biological oxygen demand) and COD (chemical oxygen demand) concentration in the sludge water is illustrated in Table 4.

**Table 4:**

| Chemical oxygen demand (COD) and biological oxygen demand (BOD) of sludge water of KHSO₅ treated and not treated sludge of the wastewater treatment plant of Tienen. The triple salt suspension contained 400 g triple salt/I. The amount of triple salt dosed corresponded to 15 g KHSO₅/kg DS (= 99 mmol KHSO₅/kg DS). The reaction time was 1 hour. | | |
|---|---|---|
| | COD (mg/l) | BOD₅²⁰ (mg/l) |
| Not KHSO₅ treated | 273 | 115 |
| KHSO₅ treated | 606 | 260 |

### Example 5.

This example demonstrates the advantage of the sludge treatment process that the process performance is relatively temperature independent in the ambient temperature range. This is illustrated in Table 5 where the process performance is compared at 20 and 10°C. This relative temperature independence is important in view of varying sludge temperature in winter / summer operation of sludge dewatering installations.

**Table 5:**

| Treatment of sludge with a suspension of 2KHSO₅.KHSO₄.K₂SO₄ and mechanical dewatering (involving the addition of conditioning agents) at 20 and 10°C. The triple salt suspension contained 400 g triple salt/I. The dosed amount of triple salt corresponded to 21.9 g KHSO₅ / kg DS (= 144 mmol KHSO₅ / kg DS). The reaction time was 1 hour. | | |
|---|---|---|
| Temperature | 20°C | 10°C |
| DS content of sludge cake of untreated sludge (%) | 29 | 27 |
| Reduction of amount DS in treated sludge relative to untreated sludge before dewatering (%) | 4 | 4 |
| Dry solids content of sludge cake (%) | 46 | 43 |
| Weight reduction of sludge cake (%) | 45 | 44 |

### Example 6.

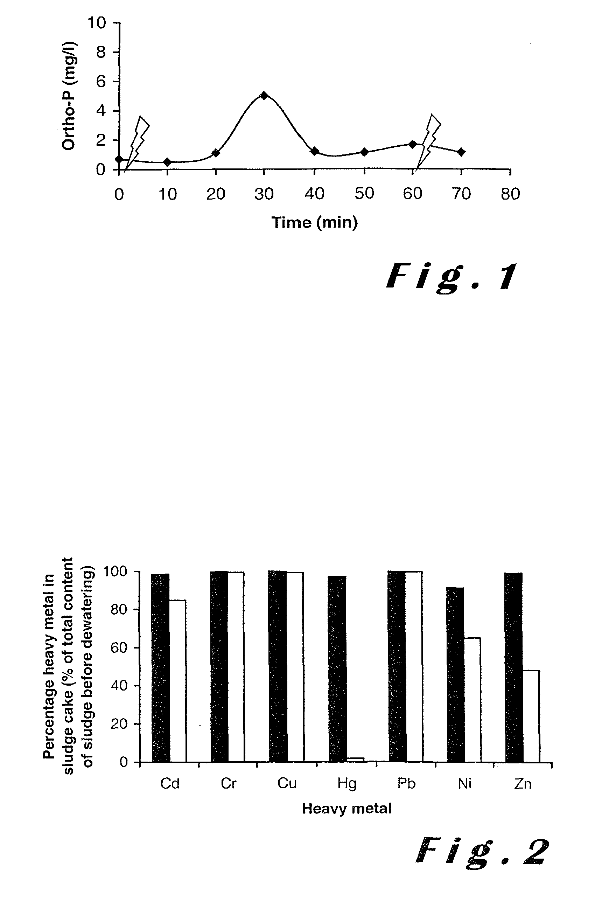

This example demonstrates the advantage of the sludge treatment process that it is suitable for treatment of Bio-P sludge. Bio-P sludge refers to sludge produced by wastewater treatment processes that implement a biological removal of phosporous compounds from the wastewater. The latter refers to the microbial uptake and storage of phosporous compounds into the microbial biomass. The release of the microbially stored phosphorous compounds should be prevented during the further processing of the Bio-P sludge. Figure 1 illustrates the evolution of the orthophosphate concentration in the sludge water of KHSO₅ treated Bio-P sludge. The triple salt suspension was added at time 0.25 minutes and at time 60.25 minutes as indicated by the arrows. At both times 0.045 g of KHSO₅ was added corresponding, on the basis of the initial amount of DS, to a total dosing of respective 8.4 g KHSO₅ / kg DS and 16.8 g KHSO₅ / kg DS (55 mmol KHSO₅ / kg DS and 110 mmol KHSO₅ / kg DS). The triple salt solution contained 4.5 g triple salt / I. The orthophosphate concentration was determined in the sludge water obtained by filtration of a sludge sample over a 0.22 µm filter. As illustrated in Figure 1 the described sludge treatment did not result in a strong release of phosphorous by Bio-P sludge.

### Example 7.

This example demonstrates the advantage of the sludge treatment process that it decreases the concentration of heavy metals in the obtained sludge cake. The latter is an advantage for disposal of the obtained sludge cake in agriculture in order to reduce the heavy metal input in the soil. A profile of heavy metal content of the sludge cake obtained on dewatering KHSO₅ treated and untreated sludge is illustrated in Figure 2. In the case of Figure 2, the sludge was treated in a semi-pilot scale comprising a batch reactor of 1 m³ equipped with a stirrer (25 - 250 rpm). The triple salt suspension dosing was performed using a suspension of 400 g triple salt / l. The reaction time was set to 1 hour. The sludge was conditioned with polyelectrolite before dewatering. The sludge was dewatered in a pilot chamber filter press comprising a total chamber volume of 4.8 l. The filter press was fed with the sludge at 300 I/h. The pressure during the dewatering increased up to 15 bar. Figure 2 illustrates the profile of the heavy metal content of the sludge cake of KHSO₅ untreated (black bars) and treated (white bars) sludge of WWTP Harelbeke. The heavy metal content of the sludge cake is expressed as the amount of heavy metals present in the sludge cake in comparison to the total amount present in the sludge before dewatering.

### Example 8.

Tests illustrating the optimisation of the dosing were performed for different wastewater treatment sludges and are presented in Table 6. The results show that an optimal triple salt dosing can be expected in the range of 2 to 20 g KHSO₅ / kg DS (= 13 to 131 mmol KHSO₅ / kg DS) depending on amongst others the KHSO₅ treatment cost and cost for disposal of the sludge cake.

**Table 6:**

| Comparison of the process performance for different KHSO₅ dosing levels for sludge samples originating from the wastewater treatment plants of Tienen, Sint-Niklaas and Lokeren. The triple salt suspension contained 400 g triple salt/I. | | | | | |
|---|---|---|---|---|---|
| **Tienen** | | | | | |
| Dosed KHSO₅ | | | | | |
| g KHSO₅/kg DS | 0 | 3.9 | 7.7 | 11.6 | 15.5 |
| mmol KHSO₅/kg DS | 0 | 25.6 | 50 | 76 | 102 |
| Reduction of amount DS in treated sludge relative to untreated sludge (%) | - | 0 | 1 | 2 | 3 |
| Dry solids content of sludge cake (%) | 22 | 29 | 34 | 34.5 | 35 |
| Weight reduction of sludge cake (%) | - | 24 | 39 | 42 | 44 |

| **Sint-Niklaas** | | | | | |
|---|---|---|---|---|---|
| Dosed KHSO₅ | | | | | |
| g KHSO₅/kg DS | 0 | 5.0 | 9.9 | 14.9 | 19.8 |
| mmol KHSO₅/kg DS | 0 | 33 | 65 | 98 | 130 |
| Reduction of amount DS in treated sludge relative to untreated sludge (%) | - | 3 | 3 | 3 | 3 |
| Dry solids content of sludge cake (%) | 19 | 28 | 30 | 30 | 31 |
| Weight reduction of sludge cake (%) | - | 34 | 37 | 38 | 41 |

| **Lokeren** | | | | | |
|---|---|---|---|---|---|
| Dosed KHSO₅ | | | | | |
| g KHSO₅/kg DS | 0 | 3.0 | 5.9 | 11.9 | |
| mmol KHSO₅/kg DS | 0 | 20 | 39 | 78 | |
| Reduction of amount DS in treated sludge relative to untreated sludge (%) | - | 2 | 3 | 4 | |
| Dry solids content of sludge cake (%) | 24 | 34 | 36 | 38 | |
| Weight reduction of sludge cake (%) | - | 32 | 35 | 40 | |

## Claims

1. A process for treating sludge to reduce the weight thereof, in particular wastewater treatment sludge, such as sewage sludge, containing organic and inorganic matter, which process comprises the step of conditioning the sludge wherein an amount of at least one peroxymonosulfate containing compound is added to the sludge and allowed to react therewith, and the step of mechanically dewatering the conditioned sludge, **characterised in that** at least a portion of said amount of the peroxymonosulfate containing compound is added to the sludge in a state wherein it is dissolved in an aqueous medium.

2. A process according to claim 1, **characterised in that** said portion comprises at least 10% by weight, preferably at least 30% by weight, and most preferably at least 50% by weight, of the amount of the peroxymonosulfate containing compound which is added to the sludge.

3. A process according to claim 1 or 2, **characterised in that** said amount of the peroxymonosulfate containing compound is substantially entirely added to the sludge in a state dissolved in said aqueous medium.

4. A process according to claim 1 or 2, **characterised in that** said amount of the peroxymonosulfate containing compound is contained in said aqueous medium when being added to the sludge, the peroxymonosulfate containing compound being partially dissolved in said aqueous medium and partially dispersed therein.

5. A process according to any one of the claims 1 to 4, **characterised in that** said peroxymonosulfate containing compound comprises a peroxymonosulfate salt, in particular potassium peroxymonosulfate.

6. A process according to claim 5, **characterised in that** said peroxymonosulfate containing compound is dissolved in said aqueous medium in the form of the triple salt 2KHSO₅.KHSO₄.K₂SO₄.

7. A process according to any one of the claims 1 to 6, **characterised in that** the sludge has a dry solids content of at least 0.2% by weight, preferably at least 0.3% by weight, when adding the peroxymonosulfate containing compound thereto.

8. A process according to claim 7, **characterised in that** the sludge has a dry solids content of at least 2% by weight, preferably at least 3% by weight, when adding the peroxymonosulfate containing compound thereto, the process comprising in particular the further step of thickening the sludge to said dry solids content before adding the peroxymonosulfate containing compound thereto.

9. A process according to any one of the claims 1 to 8, **characterised in that** the sludge has a dry solids content lower than 15% by weight when adding the peroxymonosulfate containing compound thereto.

10. A process according to any one of the claims 1 to 9, **characterised in that** the peroxymonosulfate containing compound is allowed to react with said sludge at a pH higher than 5, and preferably at a pH higher than 6.

11. A process according to claim 10, **characterised in that** said sludge is a wastewater treatment sludge which is separated from the treated waste water and the pH of which is higher than 5, the pH of said sludge being maintained above pH 5 at least until the sludge has been mechanically dewatered.

12. A process according to claim 11, **characterised in that** said wastewater treatment sludge has a pH higher than 6 and, at least until the sludge has been mechanically dewatered, the pH of the sludge is maintained above pH 6.

13. A process according to any one of the claims 1 to 12, **characterised in that** the peroxymonosulfate containing compound is allowed to react with said sludge at a pH lower than 9, and preferably at a pH lower than 8.

14. A process according to claim 13, **characterised in that** said sludge is a wastewater treatment sludge which is separated from the treated waste water and the pH of which is lower than 9, the pH of said sludge being maintained below pH 9, at least until the sludge has been mechanically dewatered.

15. A process according to any one of the claims 1 to 14, **characterised in that** the sludge to which the peroxymonosulfate containing compound is added contains D kg of dry solids and the amount of the peroxymonosulfate containing compound which is added to the sludge comprises less than 300xD mmol, preferably less than 175xD mmol,and most preferably less than 150xD mmol peroxymonosulfate ions.

16. A process according to any one of the claims 1 to 15, **characterised in that** said conditioning step comprises the addition of at least one further conditioning agent to the sludge, in particular a polyelectrolyte, the further conditioning agent being added preferably less than one day and more preferably less than one hour before the dewatering step, the peroxymonosulfate containing compound being allowed to react with the sludge preferably before the addition of the further conditioning agent.
